# EUROPEAN PATENT SPECIFICATION

(11) **EP 2 025 110 B1**
(45) Date of publication and mention of the grant of the patent: **25.03.2015**
(21) Application number: 07735554.3
(22) Date of filing: 19.04.2007
(51) Int. Cl.: H04W 40/10, H04W 40/24, H04W 52/02, H04W 84/18

(54) **METHOD AND APPARATUS FOR CONTROLLING ENERGY CONSUMPTION OF SENSOR NETWORK NODES**
VERFAHREN UND VORRICHTUNG ZUR STEUERUNG DES ENERGIEVERBRAUCHS VON SENSORNETZWERKKNOTEN
PROCÉDÉ ET APPAREIL POUR RÉGULER LA CONSOMMATION DE L'ÉNERGIE DE NOEUD DE RÉSEAU DE CAPTEURS

(30) Priority: 29.04.2006 CN 200610077346
(43) Date of publication of application: 18.02.2009
(73) Proprietor: Koninklijke Philips N.V., 5656 AE Eindhoven (NL)
(72) Inventor: ZHANG, Daqing, Shanghai 200070 (CN); CHEN, Ningjiang, Shanghai 200070 (CN); WANG, Jin, Shanghai 200070 (CN)
(74) Representative: Uittenbogaard, Frank
(86) International application number: PCT/IB2007/051418
(87) International publication number: WO 2007/125462

(56) References cited:
- EP-A- 1 113 690
- EP-A- 1 596 616
- WO-A-2005/091576

## Description

### FIELD OF THE INVENTION

This invention is related to a wireless sensor network, in particular, to a method, apparatus and computer program product for controlling energy expanding of wireless sensor network nodes and to a sensor network.

### BACKGROUND OF THE INVENTION

There are some limitations to the sensor network. Firstly, the communication capacity of sensor network is very limited; the communication bandwidth of sensors in sensor network is narrow and often varied, and the coverage range of communication is only several tens meters to hundreds meters. If the data transmission exceeds the available bandwidth, a high lost-packet rate will be caused.

Secondly, the power energy of sensors is very limited; a lot of energy is required in the information sensing of sensor network, data process and communication, and if the node power supply of sensor network under Batteries-Supply can not be replaced, the energy consumption it caused will directly affect the lifecycle of whole sensor network.

Cluster head data fusion is means of reducing node energy consumption by reducing network traffic. In accordance with this means, sensor network usually includes a plurality of node cluster, and each node cluster includes a central node, and a sensor network is divided into a plurality of sensor sub network, so it can avoid that data communication bottleneck of transferring original data directly from each sensor node to sensor network base station.

Furthermore, the operation mode based on wake-up when required between coverage node (i.e. cluster head node) and sensor node in Zigbee network can also partly solve the problem of energy supply in the sensor network.

However, a plurality of sensor nodes is included in the sensor network, and data process and communication status of each sensor node is different each other, the corresponding energy consumption status is different each other.

International Application WO2005091576 discloses a radio communication device and method of route searching. The radio communication device determines whether a message is destined for itself and subsequently determines a delay amount for responding or a relaying a transmission when the message is not addressed to itself. In a particular implementation the radio communication device monitors the remaining battery power, so as to enable the selection of a route through radio communication devices having more remaining battery power.

Therefore, on the premise that the communication capacity and power energy of sensor nodes are limited in a wireless sensor network, the problems of how to efficiently utilize the network resource to save the power consumption of sensor node and prolong the whole life of sensor network still need to be solved.

### SUMMARY OF THE INVENTION

Present invention is to provide a method and apparatus for controlling energy expanding of sensor network nodes, which are capable of efficiently utilize the network resource to save the power consumption of sensor node, and prolong the whole life of sensor network.

In accordance with the present invention a method for controlling energy expanding of a sensor network is provided according to claim 1.

In accordance with the present invention an apparatus for controlling energy expanding of a sensor network is provided according to claim 7.

In accordance with the present invention a product of computer program for controlling energy expanding of a sensor network is provided according to claim 10.

In accordance with the present invention a sensor network is provided according to claim 11.

In summary, on the premise that the communication capacity and power energy of sensor nodes are limited in a wireless sensor network, the apparatus and method of present invention can adjust data transmission parameter of the nodes accordingly based on the energy information of the nodes, save the power consumption of sensor node, and prolong the life of sensor network, in order to more efficiently utilize the network resource.

In the following, other objects and achievements of present invention will be apparent through the description of present invention and claims with reference to the figures, and prevent invention will be fully understood.

### BRIEF DESCRIPTION OF THE DRAWINGS

Figure 1 is an illustrative view of a sensor network configuration in accordance with an embodiment of present invention.
Figure 2 is an illustrative view of a sensor network configuration in accordance with another embodiment of present invention.
Figure 3 is an illustrative view of functional configuration of network controller in a sensor network in accordance with an embodiment of present invention.
Figure 4 is method flow chart of controlling energy expanding of sensor network nodes in accordance with an embodiment of present invention.
Figure 5 is an illustrative view of method of controlling energy expanding of sensor network nodes in accordance with an embodiment of present invention.

In all of above figures, same references denote the same, similar or corresponding characters or functions.

### DESCRIPTION OF THE PREFERRED EMBODIMENT

In the following, the preferred embodiments of present invention will be described in details with reference to the accompany figures.

In accordance with one embodiment of present invention, present invention will be described in details with respect to a method and apparatus for controlling energy expanding of sensor nodes in a wireless sensor network. It will be understood by those skilled in the art that present invention could be modified and applied in other types of network, such as Bluetooth network or Wireless Local Area Network (WLAN), on the basis of without departing the scope of content of present invention.

In a wireless sensor network, in order to ensure a successful data transmission, a node transmits data to a receiving node, and the receiving node will send back feedback information after successful receives the data, so as to acknowledge the successful data transmission. If the node that sends data does not receive any feedback information about successful data transmission in a retransmission timeout, the data will be re-sent. If the node that sends data does still not receive any feedback information about successful data transmission after re-sending, the data will be re-sent for many times, until the data are transmitted successfully. Alternatively, if it is still not successful after a certain times of re-sending, the data transmission will be given up.

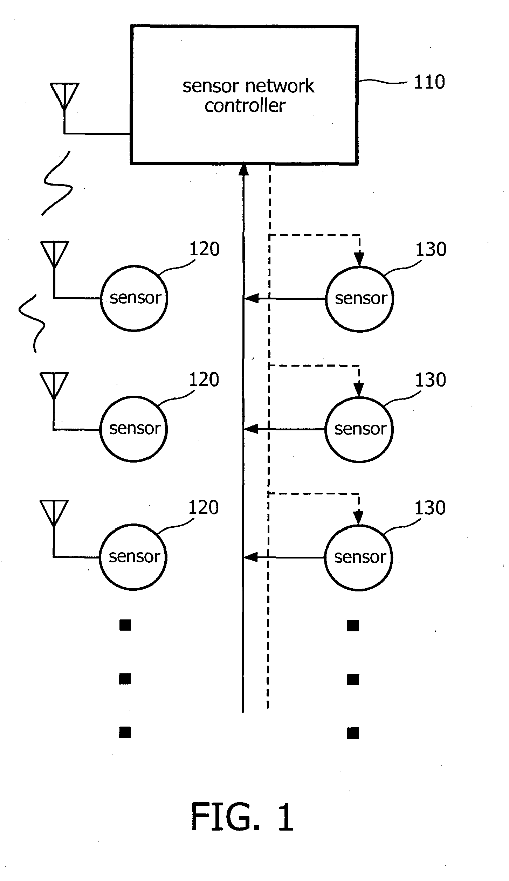

Figure 1 is an illustrative view of a sensor network configuration in accordance with an embodiment of present invention. This sensor network includes a sensor network controller 110, a plurality of wireless sensor nodes 120, and a plurality of wired sensor nodes 130.

The sensors 120 and 130 are connected to the sensor network controller 110 via wired or wireless connection, wherein the sensor network controller 110 being used to collect data, the function thereof being similar to a base station in a wireless communication network or a router in a wired communication network, or a combination of them. The wired communication between each sensor 120 and 130 and the sensor network controller 110 is via Local Area Network (LAN) or via dedicated communication line, and the wireless communication may adopt the Wireless Local Area Network (WLAN) or Bluetooth standard.

The respective sensor nodes 120, 130 transmit the information of detecting result and so on to the sensor network controller 110, for example, the wired transmission shown in solid line in the figures. At the same time, the sensor network controller 110 may also send the control signals to the respective sensors 120, 130, for example, the wired transmission shown in dashed line in the figures; which will be optimized. The optimization process includes determining whether the information will be transmitted through a certain sensor, adjusting the sampling rate of a certain sensor, or determining whether the data of a certain sensor will be encrypted, and so on. It could be viewed from Fig. 1 that the sensor network controller 110 is a convergent point of all the detected data, and to analysis and process the detected data, and then educe a process center of the detected results, which is also a control center of optimizing the network.

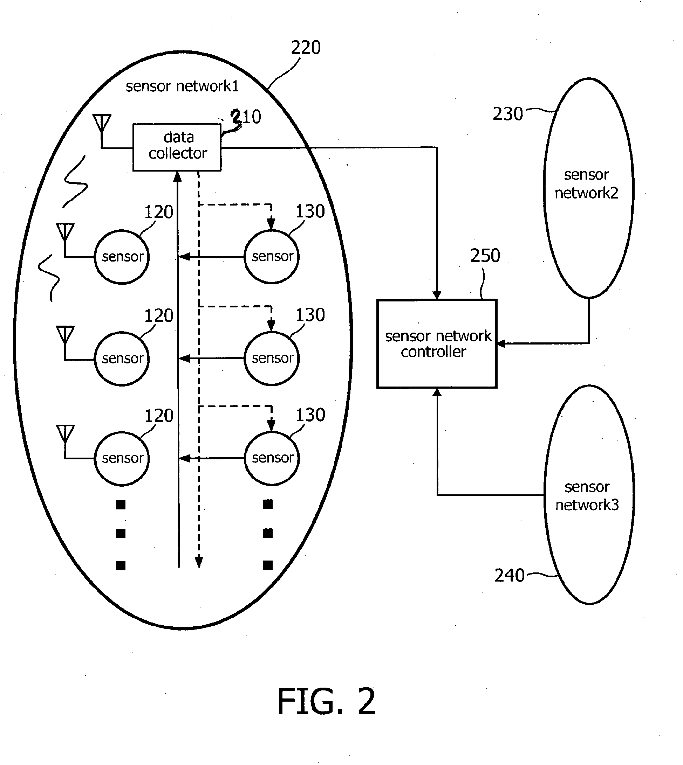

Figure 2 is an illustrative view of a sensor network configuration in accordance with another embodiment of present invention. In this embodiment, a plurality of sensors 120 and 130 are connected to the data collector 210 via wired or wireless connection, constituting a sensor network 220. Distinct sensor networks 220, 230 and 240 are connected with the sensor network controller 250 via their respective data collectors. The sensor network controller 250 collects sensor data from the respective sensor networks 220, 230 and 240, as well as sends a control command to the respective sensor networks 220, 230 and 240. Above various optimization processes are performed to the respective sensors 120 and 130 in the networks 220, 230 and 240 by the data collector, such as 210.

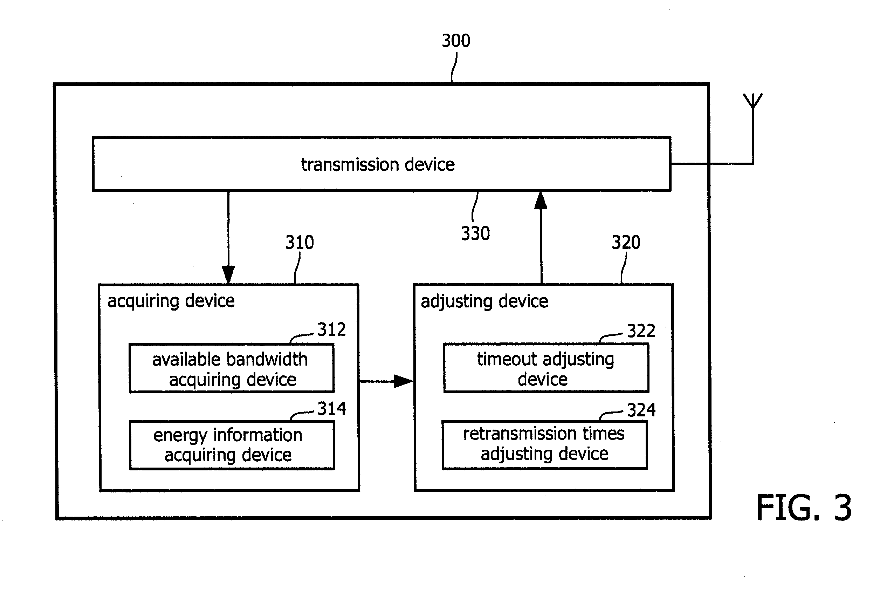

As shown in figure 3, it is an illustrative view of functional configuration of network controller in a sensor network in accordance with an embodiment of present invention.

The sensor network controller 300 includes an acquiring device 310 that includes an energy information acquiring device 314, and a adjusting device 320, wherein the energy information acquiring device 314 is used to acquire energy information, the energy information being indicative of the energy status of one node in the network. For example, the energy information may be indicative of the power supply status of a sensor node, for instance, the power status of a node may be classified into three levels, i.e. high, middle, and low, which are expressed by the values of 3, 2, and 1 respectively.

The energy information is monitored by the power monitor device (not shown in the figures) on the nodes in the network, and then transferred to the energy information acquiring device 314.

The adjusting device 320 is used to adjust at least one data transmission parameter of the node accordingly based on the energy information. Wherein the data transmission parameter may be the retransmission timeout and/or retransmission times, the retransmission timeout being the timeout in which the node that sends data will resend the data if it does not receive any feedback information about successful data transmission; the retransmission times being times at which the node that sends data will resend the data if it does not receive any feedback information about successful data transmission.

In accordance with an embodiment of present invention, the sensor network controller 300 may further include an available bandwidth acquiring device 312, for acquiring the status of available bandwidth when a node is transmitting data. The status of available bandwidth may be monitored by the network monitor device (not shown in the figures), and then transferred to the available bandwidth acquiring device 312.

The adjusting device 320 includes a timeout adjusting device 322, for adjusting the retransmission timeout of a sensor node based on the energy information acquired by the acquiring device. The more sufficient power supply the sensor node has, the shorter timeout is retransmitting the data to the objective sensor node adjusted to, and otherwise, the longer timeout is retransmitting the data adjusted to. In this way, the power consumption of the sensor node could be saved.

The adjusting device 320 includes a retransmission times adjusting device 324, for adjusting the times of retransmitting data after the data transmission failed, based on the energy information acquired by the acquiring device. The more sufficient power supply the sensor node has, the more times are retransmitting the data to the objective sensor node adjusted to, and otherwise, the less times are retransmitting the data adjusted to. In this way, the power consumption of the sensor node could be saved.

The sensor network controller 300 further includes a transmission device 330, for the sensor nodes to send and receive data, and communicate with other sensor nodes in the sensor network. For example, the transmission device 330 may be a signal transmitter/receiver under the protocol of Zigbee/Bluetooth network.

In present embodiment, acquiring the power of the network controller 300 can be achieved by bandwidth acquiring, and the functions of adjusting the retransmission timeout and adjusting the retransmission times can be performed by various nodes in a sensor network, as long as these various nodes can communicate each other.

It should be understood that the all/part of functions of the sensor network controller 300 disclosed in Fig. 3 according to an embodiment of present invention, can also be achieved by appropriately programmed computer, the computer being loaded with a computer program for controlling energy expanding of sensor network nodes. The computer program includes: code for acquiring energy information, said energy information being indicative of the energy status of a node in the network, and; code for adjusting at least one data transmission parameter accordingly based on the energy information.

Above such a computer program can be stored in a storage media.

These parts of above computer program code can be provided to a processor to generate a machine, so that the code executed on the processor creates a device that can achieve above functions.

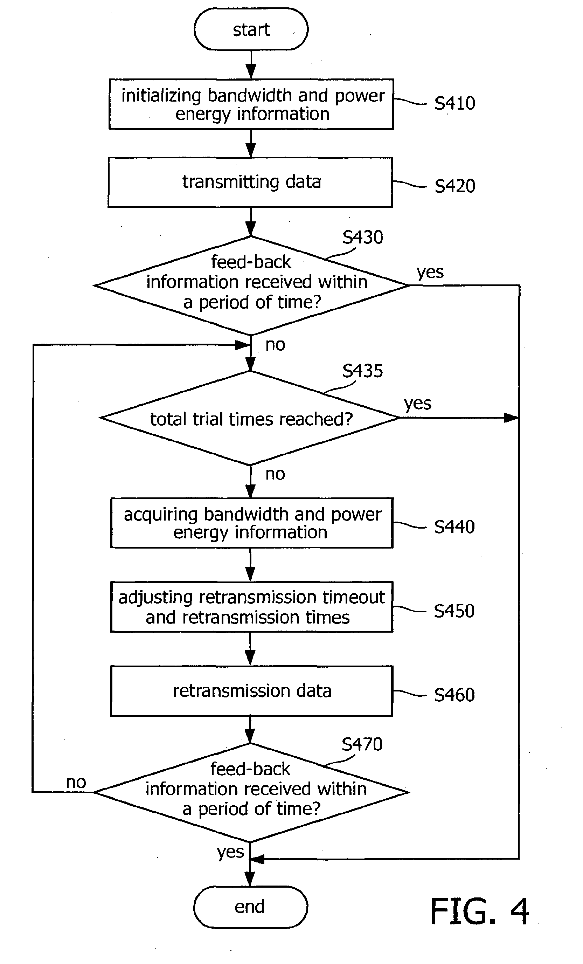

As shown in Figure 4, it is method flow chart of optimizing the wireless sensor network in accordance with an embodiment of present invention.

At first, at step S410, the data transmission parameters of respective sensor nodes in the sensor network are initialized. During the initializing communication process, convergent node broadcasts connection signaling actively, and after a data frame and a MAC (Media Access Control) command frame are successful received and verified at a sensor node, an acknowledge frame is returned to the convergent node. Next, the sensor node is brought into a sleep operation mode. Next, the convergent node and the sensor node are master-slave exchanged, and the convergent node module is brought into a mode operation status, and waiting for a response for connecting request signaling; and the sensor node is operated in the master mode, and waiting for wake-up when required or launches a connecting request in other ways.

After initialization, two initialized data transmission parameters can be obtained: a retransmission timeout and a retransmission times.

At step S420, the sensor node starts to transmit the data to another sensor node.

At step S430, it is to determine whether an acknowledge information about a successful data transmission fed-back from another sensor node is received in an initialized retransmission timeout. If an acknowledge information is received in the retransmission timeout, the whole process will end immediately.

If an acknowledge information is not received by the sensor node in the initialized timeout, at step S435, it is to determine that whether the total trial times of data retransmission (i.e. the initialized retransmission times or adjusted retransmission times) have been reached. If the total trial times of data retransmission have been reached, the whole process will end immediately.

If it is determined that the total trial times of data retransmission have not been reached, at step S440, the sensor node firstly acquires its current energy status information, and may acquires current available bandwidth information in the sensor network.

At step S450, according to the acquired energy status information and/or current available bandwidth information, the retransmission timeout and retransmission times are adjusted accordingly.

The more sufficient power supply the sensor node has, the shorter timeout is retransmitting the data to the objective sensor node adjusted to, and otherwise, the longer timeout is retransmitting the data adjusted to. In this way, the power consumption of the sensor node could be saved. The more sufficient power supply the sensor node has, the more times are retransmitting the data to the objective sensor node adjusted to, and otherwise, the less times are retransmitting the data adjusted to. In this way, the power consumption of the sensor node could be saved.

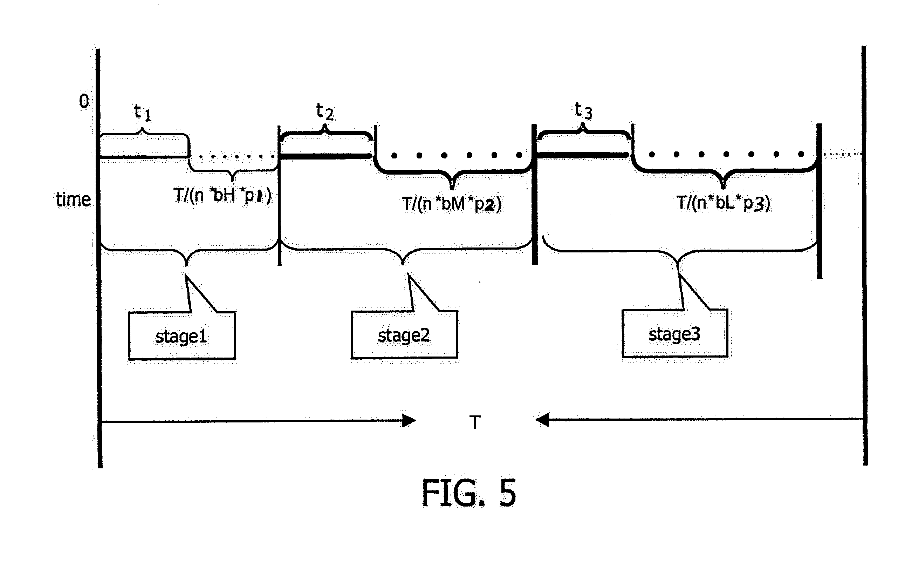

For the same reason, the more sufficient available bandwidth the sensor node has, the shorter timeout is retransmitting the data to the objective sensor node adjusted to, and otherwise, the longer timeout is retransmitting the data adjusted to. The specific adjustment is shown in the figure 5.

At step S460, according to the adjusted data transmission parameters, i.e. retransmission timeout and retransmission times, the data is retransmitted.

At step S470, it is to determine whether an acknowledge information about a successful data transmission fed-back from another sensor node is received in the adjusted retransmission timeout. If an acknowledge information is received in the initialized timeout, the whole process will end immediately. Otherwise, jump to step S440, its current energy status information is acquired again, and current available bandwidth information in the sensor network is acquired, and according to the energy status information and current available bandwidth information, the retransmission timeout and retransmission times are adjusted, until the data transmission is successful, or the retransmission times have been reached then the transmission is given up.

It could be understood that the frequency of adjusting the data transmission data (step S450) might be adjusted according to the actual network status. For example, it is to adjust once after three times of data transmission failure, or to adjust once in every certain period, such as 30 minutes.

Figure 5 is an illustrative view of method of controlling energy expanding of sensor network nodes in accordance with an embodiment of present invention.

As shown in the figure, wherein T is indicative of interval between two data transmissions of a sensor node; t1, t2 and t3 are indicative of the time in which the sensor node transmits a data for many times respectively; b is indicative of the network available bandwidth, and bH, bM and bL are indicative of a higher available bandwidth, a middle available bandwidth and a lower available bandwidth respectively; pS is indicative of the power supply status of the sensor node, for example, the power status of a node may be classified into three levels, i.e. high, middle, and low, which are expressed by the power information 1, 2, and 3 respectively.

Firstly, at stage 1, during the period t1, the sensor node transmits a data to an objective sensor node, and the current available bandwidth is bH, and the power supply status of the sensor node is p1, then if during the period T/(n*bH*p1) the sensor node does not receive an acknowledge information about a successful data receipt from the objective sensor node, go to stage 2, and the data is retransmitted to the objective sensor node. Wherein n is an adjust coefficient, for example, n may be set to equal to 20-30 according to the actual power supply status of the sensor node.

Next, at stage 2, during the period t2, the sensor node retransmits the same data to an objective sensor node, at the same time, according to the updated information, it is known that the current available bandwidth is bM, and the power supply status of the sensor node is p2, and then the retransmission timeout is adjusted to: T/(n*bM*p2).

According to the adjusted timeout, if at the time t1+t2+T/(n*bH*p1)+ T/(n*bM*p2), the sensor node does not receive an acknowledge information about a successful data receipt from the objective sensor node, go to stage 3, and the data is retransmitted to the objective sensor node.

Next, at stage 3, during the period t3, the sensor node retransmits the same data to an objective sensor node again, at the same time, according to the updated information, it is known that the current available bandwidth is bL, and the power supply status of the sensor node is p3, and then the retransmission timeout is adjusted to: T/(n*bL*p3).

According to the adjusted timeout, if at the time t1+t2+t3+T/(n=*bH*p1)+ T/(n*bM*p2)+ T/(n*bL*p3), the sensor node does not receive an acknowledge information about a successful data receipt from the objective sensor node, the data is continued to be retransmitted to the objective sensor node, until the data transmission is successful, or retransmission times have been reached then the transmission is given up.

According to an embodiment of present invention, the times at which the data is retransmitted to the objective sensor node can be adjusted accordingly based on the power supply status of the sensor node. The more sufficient power supply the sensor node has, the more is the total trial times to retransmit the data to the objective sensor node adjusted, and otherwise, the less is the (total trial) times to retransmit the data adjusted. In this way, the power consumption of the sensor node could be saved.

For example, the power status pS of a sensor node may be classified into three levels, i.e. high, middle, and low, which are expressed by the value 1, 2, and 3 respectively, and then the total trial times to retransmit the data R could be calculated from R=m/pS. Wherein m is a positive integer coefficient, for example, it can be set to m=8, and then if the power status of the sensor node pS=2, the times to retransmit the data R equals to 4 times.

It should be understood by those skilled in the art that, the method and apparatus disclosed in present invention can be modified without departing the content of present invention. Therefore, the protect scope of present invention should be limited by the content of appended claims.

## Claims

1. A method for controlling energy expanding of a sensor network (220, 230, 240), comprising steps of:
(a) acquiring an energy information (S440), said energy information being indicative of an energy status of a node (120,130) in the network (220, 230, 240),
(b) acquiring a bandwidth information (S440), said bandwidth information being indicative of the available bandwidth status of the node (120, 130) and;
(c) adjusting (S450) at least one data transmission parameter of the node (120, 130) accordingly based on the energy information and based on the bandwidth information, the data transmission parameter being for controlling retransmission if the node (120, 130) does not receive any feedback information about successful data transmission.

2. The method as claimed in claim 1, wherein said data transmission parameter is the retransmission timeout after which said node (120, 130) starts to retransmit the data after the data transmission fails.

3. The method as claimed in claim 2, wherein
energy information indicating a higher power reserve results in a shorter retransmission timeout period and
energy information indicating a lower power reserve results in a longer retransmission timeout period.

4. The method as claimed in claim 2, wherein
- bandwidth information indicating more available bandwidth results in a shorter retransmission timeout period and
- bandwidth information indicating less available bandwidth results in a longer retransmission timeout period.

5. The method as claimed in claim 1, wherein said data transmission parameter is the retransmission times which is the number of times said node (120, 130) starts to retransmit the data after the data transmission fails.

6. The method as claimed in claim 5, wherein
- energy information indicating a higher power reserve results in a higher number of times at which said node (120, 130) starts to retransmit and
- energy information indicating a lower power reserve results in a lower number of times at which said node (120, 130) starts to retransmit.

7. An apparatus (300) for controlling energy expanding of a sensor network (220, 230, 240), comprising:
a first acquiring means (314) for acquiring energy information, said energy information being indicative of an energy status of a node (120,130) in the network (220, 230, 240),
a second acquiring means (312) for acquiring a bandwidth information, said bandwidth information indicative of the available bandwidth status of the node (120, 130) and;
an adjusting device (320) for adjusting at least one data transmission parameter of the node (120, 130) accordingly based on the energy information and based on the bandwidth information, the data transmission parameter being for controlling retransmission if the node (120, 130) does not receive any feedback information about successful data transmission.

8. The apparatus (300) as claimed in claim 7, wherein said data transmission parameter is the retransmission timeout after which said node (120, 130) starts to retransmit the data after the data transmission fails.

9. The apparatus (300) as claimed in claim 7, wherein said data transmission parameter is the retransmission times which is the number of times said node (120,130) starts to retransmit the data after the data transmission fails.

10. A product of computer program for controlling energy expanding of a sensor network (220, 230, 240), comprising:
code for acquiring an energy information, said energy information being indicative of the energy status of a node (120, 130) in the network (220, 230, 240),
code for acquiring a bandwidth information, said bandwidth information being indicative of the available bandwidth status of the node (120, 130) and;
code for adjusting at least one data transmission parameter of the node (120, 130) accordingly based on the energy information and based on the bandwidth information, the data transmission parameter being for controlling retransmission if the node (120, 130) does not receive any feedback information about successful data transmission.

11. A sensor network (220, 230, 240), comprising:
a plurality of nodes (120,130); and
a network controller (300) connected with said plurality of nodes (120, 130);
wherein said network controller (300) comprising:
a first acquiring device (314) for acquiring an energy information, said energy information being indicative of an energy status of a node (120, 130) in the network (220, 230, 240);
a second acquiring device (312) for acquiring a bandwidth information, said bandwidth information being indicative of the available bandwidth status of the node (120, 130); and
an adjusting device (320), for adjusting at least one data transmission parameter of the node (120, 130) accordingly based on the energy information and based on the bandwidth information, the data transmission parameter being for controlling retransmission if the node (120, 130) does not receive any feedback information about successful data transmission.

## Patentansprüche

1. Verfahren zur Steuerung der Energieexpansion eines Sensornetzwerks (220, 230, 240), das die folgenden Schritte umfasst, wonach:
(a) Energieinformationen erfasst werden (S440), wobei die Energieinformationen für einen Energiestatus eines Knotens (120, 130) in dem Netzwerk (220, 230, 240) bezeichnend sind;
(b) Bandbreiteninformationen erfasst werden (S440), wobei die Bandbreiteninformationen für den die verfügbare Bandbreite betreffenden Status des Knotens (120, 130) bezeichnend sind; und
(c) mindestens ein Datenübertragungsparameter des Knotens (120, 130) auf der Basis der Energieinformationen und der Basis der Bandbreiteninformationen entsprechend eingestellt wird (S450), wobei der Datenübertragungsparameter zur Steuerung einer Sendewiederholung dient, wenn der Knoten (120, 130) keine Rückmeldeinformationen über eine erfolgreiche Datenübertragung empfängt.

2. Verfahren nach Anspruch 1, wobei es sich bei dem Datenübertragungsparameter um den Sendewiederholungs-Timeout handelt, nach dem der Knoten (120, 130) beginnt, die Daten erneut zu übertragen, nachdem die Datenübertragung gescheitert ist.

3. Verfahren nach Anspruch 2, wobei
- Energieinformationen, die eine höhere Energiereserve anzeigen, in einer kürzeren Sendewiederholungs-Timeoutperiode resultieren und
- Energieinformationen, die eine geringere Energiereserve anzeigen, in einer längeren Sendewiederholungs-Timeoutperiode resultieren.

4. Verfahren nach Anspruch 2, wobei
- Bandbreiteninformationen, die mehr verfügbare Bandbreite anzeigen, in einer kürzeren Sendewiederholungs-Timeoutperiode resultieren und
- Bandbreiteninformationen, die weniger verfügbare Bandbreite anzeigen, in einer längeren Sendewiederholungs-Timeoutperiode resultieren.

5. Verfahren nach Anspruch 1, wobei der Datenübertragungsparameter die Sendewiederholungsmale darstellt, wobei es sich hierbei um die Anzahl der Male handelt, die der Knoten (120, 130) beginnt, die Daten nach Scheitern der Daten erneut zu übertragen.

6. Verfahren nach Anspruch 5, wobei
- Energieinformationen, die eine höhere Energiereserve anzeigen, in einer höheren Anzahl von Malen resultieren, an denen der Knoten (120, 130) beginnt, eine Sendewiederholung vorzunehmen, und
- Energieinformationen, die eine geringere Energiereserve anzeigen, in einer niedrigem Anzahl von Malen resultieren, an denen der Knoten (120, 130) beginnt, eine Sendewiederholung vorzunehmen.

7. Vorrichtung (300) zur Steuerung der Energieexpansion eines Sensornetzwerks (220, 230, 240), umfassend:
- ein erstes Erfassungsmittel (314) zur Erfassung von Energieinformationen, wobei die Energieinformationen für einen Energiestatus eines Knotens (120, 130) in dem Netzwerk (220, 230, 240) bezeichnend sind;
- ein zweites Erfassungsmittel (312) zur Erfassung von Bandbreiteninformationen, wobei die Bandbreiteninformationen für den die verfügbare Bandbreite betreffenden Status des Knotens (120, 130) bezeichnend sind; sowie
- eine Einstelleinrichtung (320) zur entsprechenden Einstellung von mindestens einem Datenübertragungsparameter des Knotens (120, 130) auf der Basis der Energieinformationen und der Basis der Bandbreiteninformationen, wobei der Datenübertragungsparameter zur Steuerung einer Sendewiederholung dient, wenn der Knoten (120, 130) keine Rückmeldeinformationen über eine erfolgreiche Datenübertragung empfängt.

8. Vorrichtung (300) nach Anspruch 7, wobei es sich bei dem Datenübertragungsparameter um den Sendewiederholungs-Timeout handelt, nach dem der Knoten (120, 130) beginnt, die Daten erneut zu übertragen, nachdem die Datenübertragung gescheitert ist.

9. Vorrichtung (300) nach Anspruch 7, wobei der Datenübertragungsparameter die Sendewiederholungsmale darstellt, wobei es sich hierbei um die Anzahl der Male handelt, die der Knoten (120, 130) beginnt, die Daten nach Scheitern der Daten erneut zu übertragen.

10. Computerprogrammprodukt zur Steuerung der Energieexpansion eines Sensornetzwerks (220, 230, 240), umfassend:
- Code zur Erfassung von Energieinformationen, wobei die Energieinformationen für einen Energiestatus eines Knotens (120, 130) in dem Netzwerk (220, 230, 240) bezeichnend sind;
- Code zur Erfassung von Bandbreiteninformationen, wobei die Bandbreiteninformationen für den die verfügbare Bandbreite betreffenden Status des Knotens (120, 130) bezeichnend sind; sowie
- Code zur entsprechenden Einstellung von mindestens einem Datenübertragungsparameter des Knotens (120, 130) auf der Basis der Energieinformationen und der Basis der Bandbreiteninformationen, wobei der Datenübertragungsparameter zur Steuerung einer Sendewiederholung dient, wenn der Knoten (120, 130) keine Rückmeldeinformationen über eine erfolgreiche Datenübertragung empfängt.

11. Sensornetzwerk (220, 230, 240), umfassend:
- mehrere Knoten (120, 130); sowie
- eine mit den mehreren Knoten (120, 130) verbundene Netzwerksteuereinheit (300);
wobei die Netzwerksteuereinheit (300) umfasst:
- eine erste Erfassungseinrichtung (314) zur Erfassung von Energieinformationen, wobei die Energieinformationen für einen Energiestatus eines Knotens (120, 130) in dem Netzwerk (220, 230, 240) bezeichnend sind;
- eine zweite Erfassungseinrichtung (312) zur Erfassung von Bandbreiteninformationen, wobei die Bandbreiteninformationen für den die verfügbare Bandbreite betreffenden Status des Knotens (120, 130) bezeichnend sind;
- eine Einstelleinrichtung (320) zur entsprechenden Einstellung von mindestens einem Datenübertragungsparameter des Knotens (120, 130) auf der Basis der Energieinformationen und der Basis der Bandbreiteninformationen, wobei der Datenübertragungsparameter zur Steuerung einer Sendewiederholung dient, wenn der Knoten (120, 130) keine Rückmeldeinformationen über eine erfolgreiche Datenübertragung empfängt.

## Revendications

1. Procédé de régulation d'énergie en expansion d'un réseau de capteurs (220, 230, 240), comprenant les étapes de :
(a) l'acquisition d'une information d'énergie (S440), ladite information d'énergie étant indicative d'un statut d'énergie d'un noeud (120, 130) dans le réseau (220, 230, 240) ;
(b) l'acquisition d'une information de largeur de bande (S440), ladite information de largeur de bande étant indicative du statut de largeur de bande disponible du noeud (120, 130) ; et
(c) l'ajustement (S450) d'au moins un paramètre de transmission de données du noeud (120, 130) en conséquence sur la base de l'information d'énergie et sur la base de l'information de largeur de bande, le paramètre de transmission de données étant destiné à commander une retransmission si le noeud (120, 130) ne reçoit pas d'information de rétroaction au sujet d'une transmission de données réussie.

2. Procédé selon la revendication 1, dans lequel ledit paramètre de transmission de données est le délai d'attente de retransmission à l'expiration duquel ledit noeud (120, 130) commence à retransmettre les données après l'échec de la transmission de données.

3. Procédé selon la revendication 2, dans lequel
- une information d'énergie indiquant une réserve de puissance supérieure engendre une période de délai d'attente de retransmission plus courte ; et
- une information d'énergie indiquant une réserve de puissance inférieure engendre une période de délai d'attente de retransmission plus longue.

4. Procédé selon la revendication 2, dans lequel
- une information de largeur de bande indiquant plus de largeur de bande disponible engendre une période de délai d'attente de retransmission plus courte ; et
- une information de largeur de bande indiquant moins de largeur de bande disponible engendre une période de délai d'attente de retransmission plus longue.

5. Procédé selon la revendication 1, dans lequel ledit paramètre de transmission de données est le nombre de retransmissions qui est le nombre de fois que ledit noeud (120, 130) commence à retransmettre les données après l'échec de transmission de données.

6. Procédé selon la revendication 5, dans lequel
- une information d'énergie indiquant une réserve de puissance supérieure engendre un plus grand nombre de fois que ledit noeud (120, 130) commence à retransmettre ; et
- une information d'énergie indiquant une réserve de puissance inférieure engendre un plus petit nombre de fois que ledit noeud (120, 130) commence à retransmettre.

7. Appareil (300) de régulation d'énergie en expansion d'un réseau de capteurs (220, 230, 240), comprenant :
un premier moyen d'acquisition (314) destiné à l'acquisition d'une information d'énergie, ladite information d'énergie étant indicative d'un statut d'énergie d'un noeud (120, 130) dans le réseau (220, 230, 240) ;
un deuxième moyen d'acquisition (312) destiné à l'acquisition d'une information de largeur de bande, ladite information de largeur de bande étant indicative du statut de largeur de bande disponible du noeud (120, 130) ; et
un dispositif d'ajustement (320) destiné à l'ajustement d'au moins un paramètre de transmission de données du noeud (120, 130) en conséquence sur la base de l'information d'énergie et sur la base de l'information de largeur de bande, le paramètre de transmission de données étant destiné à commander une retransmission si le noeud (120, 130) ne reçoit pas d'information de rétroaction au sujet d'une transmission de données réussie.

8. Appareil (300) selon la revendication 7, dans lequel ledit paramètre de transmission de données est le délai d'attente de retransmission à l'expiration duquel ledit noeud (120, 130) commence à retransmettre les données après l'échec de la transmission de données.

9. Appareil (300) selon la revendication 7, dans lequel ledit paramètre de transmission de données est le nombre de retransmissions qui est le nombre de fois que ledit noeud (120, 130) commence à retransmettre les données après l'échec de transmission de données.

10. Produit de programme informatique de régulation d'énergie en expansion d'un réseau de capteurs (220, 230, 240), comprenant :
un code destiné à l'acquisition d'une information d'énergie, ladite information d'énergie étant indicative du statut d'énergie d'un noeud (120, 130) dans le réseau (220, 230, 240) ;
un code destiné à l'acquisition d'une information de largeur de bande, ladite information de largeur de bande étant indicative du statut de largeur de bande disponible du noeud (120, 130) ; et
un code destiné à l'ajustement d'au moins un paramètre de transmission de données du noeud (120, 130) en conséquence sur la base de l'information d'énergie et sur la base de l'information de largeur de bande, le paramètre de transmission de données étant destiné à commander une retransmission si le noeud (120, 130) ne reçoit pas d'information de rétroaction au sujet d'une transmission de données réussie.

11. Réseau de capteurs (220, 230, 240), comprenant :
une pluralité de noeuds (120, 130) ; et
un organe de commande de réseau (300) relié à ladite pluralité de noeuds (120, 130) ;
dans lequel ledit organe de commande de réseau (300) comprend :
un premier dispositif d'acquisition (314) destiné à l'acquisition d'une information d'énergie, ladite information d'énergie étant indicative d'un statut d'énergie d'un noeud (120, 130) dans le réseau (220, 230, 240) ;
un deuxième dispositif d'acquisition (312) destiné à l'acquisition d'une information de largeur de bande, ladite information de largeur de bande étant indicative du statut de largeur de bande disponible du noeud (120, 130) ; et
un dispositif d'ajustement (320) destiné à l'ajustement d'au moins un paramètre de transmission de données du noeud (120, 130) en conséquence sur la base de l'information d'énergie et sur la base de l'information de largeur de bande, le paramètre de transmission de données étant destiné à commander une retransmission si le noeud (120, 130) ne reçoit pas d'information de rétroaction au sujet d'une transmission de données réussie.
